# EUROPÄISCHE PATENTSCHRIFT

(11) **EP 3 790 705 B1**
(45) Veröffentlichungstag und Bekanntmachung des Hinweises auf die Patenterteilung: **08.11.2023**
(21) Anmeldenummer: 19722894.3
(22) Anmeldetag: 08.05.2019
(51) Int. Cl.: B23Q 11/10, F16N 7/34, B05B 7/24, B21J 15/14, B05B 7/00, B05B 7/04, B05B 7/12, B23Q 11/00, B05B 1/08

(54) **ZERSTÄUBEREINHEIT EINES MINIMALMENGENSCHMIERSYSTEMS**
ATOMIZER UNIT OF A MINIMAL QUANTITY LUBRICATION SYSTEM
UNITÉ DE PULVÉRISATION D'UN SYSTÈME DE LUBRIFICATION À QUANTITÉ MINIMALE

(30) Priorität: 08.05.2018 DE 102018111083
(43) Veröffentlichungstag der Anmeldung: 17.03.2021
(73) Patentinhaber: Broetje-Automation GmbH, 26180 Rastede (DE)
(72) Erfinder: LEHMANN, Marc, 26655 Westerstede (DE); FRERS, Henning, 26215 Wiefelstede (DE); JOSTMANN, Sebastian, 48249 Dülmen (DE)
(74) Vertreter: Gottschald Patentanwälte Partnerschaft mbB
(86) Internationale Anmeldenummer: PCT/EP2019/061822
(87) Internationale Veröffentlichungsnummer: WO 2019/215232

(56) Entgegenhaltungen:
- EP-A1- 0 535 271
- EP-B1- 0 535 271
- DE-A1- 10 310 118
- DE-U1- 29 724 651
- DE-U1-202009 017 656

## Beschreibung

Die Erfindung betrifft eine Zerstäubereinheit eines Minimalmengenschmiersystems zum Kühlen und/oder Schmieren eines Zerspan-Bearbeitungsprozesses zwischen einem Werkzeug und einem Werkstück an einer Bearbeitungsstelle gemäß dem Oberbegriff von Anspruch 1, ein Minimalmengenschmiersystem gemäß Anspruch 8, eine Bearbeitungsanlage gemäß Anspruch 11, sowie ein Verfahren zum Betreiben einer Zerstäubereinheit und/oder einer Minimalmengenschmieranlage und/oder einer Bearbeitungsanlage gemäß Anspruch 16.

In vielen Zerspan-Bearbeitungsprozessen ist es vorteilhaft, an der Bearbeitungsstelle zwischen Werkzeug und Werkstück eine Kühlung und/oder Schmierung vorzusehen. Durch eine solche Kühlung und/oder Schmierung kann die Prozesssicherheit zumeist erheblich gesteigert werden. Es lässt sich die Bearbeitungsqualität sowie die Standzeit des Werkzeugs steigern und der Temperatureintrag ins Werkstück reduzieren.

Gleichzeitig sollen jedoch auch die Kosten für das jeweilige Kühl- und/oder Schmiermittel niedrig gehalten sowie ein unnötiges Freisetzen von Kühl-und/oder Schmiermittel in die Umgebung vermieden werden. Zudem soll ein Reinigen des Werkstücks von Kühl- und/oder Schmiermittel nach der Bearbeitung möglichst vermieden werden. Mit der Größe des Werkstücks steigt der Aufwand für das Reinigen erheblich an, insbesondere, wenn dieses an vielen Stellen nur partiell bearbeitet wird. Dies gilt insbesondere für Flugzeugstrukturbauteile, bei denen mehrere Werkstückteile durch Bohren und Nieten miteinander verbunden werden. Um die eingesetzte Kühl- und/oder Schmiermittelmenge im Zerspanbearbeitungs-Prozess zu reduzieren, wurden sogenannte Minimalmengenschmiersysteme entwickelt.

Minimalmengenschmiersysteme sind aus der EP 0 535 271 A1 und der DE 297 24 651 U1 bekannt. Aus der DE 20 2009 017 656 U1 ist beispielsweise ein Minimalmengenschmiersystem für die spanende Bearbeitung bekannt, bei dem das Kühl- und/oder Schmiermittel mit einer Hochdruckdüse in eine Kammer eingesprüht wird, welches mittels eines Druckluftstroms zur Bearbeitungsstelle transportiert wird. Dieses System kann als Einkanalminimalmengenschmiersystem ausgebildet sein, bei dem das Aerosol außerhalb der Spindel einer Bearbeitungsanlage erzeugt wird und mittels einer Einkanalführung durch die Spindel und das

Werkzeug zur Bearbeitungsstelle transportiert wird, oder als Zweikanalminimalmengenschmiersystem ausgebildet sein, bei dem das Aerosol innerhalb der Spindel erzeugt wird und der Spindel mittels separater Leitungen Druckluft und das Kühl- und/oder Schmiermittel zugeführt wird.

Ferner sind externe Minimalmengenschmiersysteme bekannt, welche das Kühl-und/oder Schmiermittel nicht durch die Spindel und das Werkzeug zur Bearbeitungsstelle führen, sondern außerhalb des Werkzeugs.

Das in der DE 20 2009 017 656 U1 beschriebene System weist im Verhältnis zu anderen Minimalmengenschmiersystemen, zumindest in den Varianten als Zweikanalminimalmengenschmiersystem, bereits verbesserte Reaktionszeiten auf und kann flexibler auf wechselnde Anforderungen reagieren. In diesen Varianten ist es in der Spindel angeordnet. Es besteht dennoch weiterer Optimierungsbedarf hinsichtlich Reaktionszeit und Einstellbarkeit, insbesondere für Bearbeitungsanlagen, in deren Spindel bauraumbedingt die Aerosolerzeugung nicht möglich ist.

Der vorliegenden Erfindung liegt daher das Problem zu Grunde, die Reaktionszeit sowie die Anpassung an sich ändernde Bedingung und die Menge des einzusetzenden Kühl- und/oder Schmiermittels zu verbessern, insbesondere bei kleinen Spindeln.

Das vorstehend genannte Problem wird bei einer Zerstäubereinheit eines Minimalmengenschmiersystems gemäß dem Oberbegriff von Anspruch 1 durch die Merkmale des kennzeichnenden Teils von Anspruch 1 gelöst.

Die Zerstäubereinheit eines Minimalmengenschmiersystems zum Kühlen und/oder Schmieren eines Zerspan-Bearbeitungsprozesses zwischen einem Werkzeug und einem Werkstück an einer Bearbeitungsstelle weist vorschlagsgemäß eine Kammeranordnung mit einem Kammeranordnungsinnenraum, mindestens einen ersten Zuführkanal zum Zuführen eines ersten Druckluftstroms in und durch den Kammeranordnungsinnenraum zu einem Weiterführungskanal und ein Einspritzventil zum Einspritzen eines Kühl- und/oder Schmiermittels in einen Einspritzbereich in den ersten Druckluftstrom im Kammeranordnungsinnenraum und mindestens einen zweiten Zuführkanal zum Zuführten eines zweiten Druckluftstroms in und durch den Kammeranordnungsinnenraum zu dem Weiterführungskanal auf. Dabei ist die Zerstäubereinheit derart ausgestaltet, dass sich der zweite Druckluftstrom mit dem ersten Druckluftstrom und dem ggf. in den ersten Druckluftstrom eingespritzten Kühl- und/oder Schmiermittel stromabwärts des Einspritzbereichs zu einem Transportstrom zum Transport des eingespritzten Kühl- und/oder Schmiermittels vereinigt und dass der Transportstrom durch den Weiterführungskanal zur Bearbeitungsstelle geführt wird.

Das Einspritzen des Kühl- und/oder Schmiermittels in den ersten Druckluftstrom und das spätere Vereinigen des ersten und des zweiten Druckluftstroms ermöglicht eine besonders homogene Verteilung und geringe Konzentration im Transportstrom und damit ein besonders präzises und gleichmäßiges, flexibel einstellbares Zuführen von Kühl- undloder Schmiermittel zur Bearbeitungsstelle. Ferner kann zügig auf Bedarfsänderungen durch ein Ändern der Einspritzparameter reagiert werden. Dies ist insbesondere bei Bohrprozessen, in denen vergleichsweise flache Löcher oder vergleichsweise dünne Werkstücke durchbohrt werden, von besonderem Vorteil, da hier nur für sehr kurze Zeiträume Aerosol benötigt wird. Dieser Vorteil verstärkt sich insbesondere dann, wenn das Werkstück ein Hybrid-Werkstück ist, welches aus verschiedenen Materialien, insbesondere Schichten verschiedenen Materials, besteht.

In den Ansprüchen 2 bis 4 sind besonders bevorzugte Weiterbildungen betreffend die Ausgestaltung der Kammeranordnung mit einer Einspritzkammer und/oder Zerstäuberkammer sowie das Einspritzen und Zerstäuben des Kühl-und/oder Schmiermittels zur Erzeugung eines besonders homogenen und gegebenenfalls niedrig konzentrierten Aerosols beschrieben.

Gemäß der Weiterbildung der Erfindung nach den Ansprüchen 5 und 6 ist das Einspritzventil ein Hochdruckeinspritzventil und/oder pulsartig ansteuerbar. Hierdurch kann eine besonders flexibel und reaktionsschnelle Dosierung bei hoher Homogenität erreicht werden.

Eine noch bessere Zerstäubungswirkung kann insbesondere dann erreicht werden, wenn die Durchtrittsöffnung der Düse die in Anspruch 7 angegebene Größe nicht überschreitet.

Darüber hinaus wird das eingangs geschilderte Problem bei einem Minimalmengenschmiersystem gemäß Anspruch 8 durch die Merkmale desselben gelöst.

Das Minimalmengenschmiersystem kann dabei alle in Zusammenhang mit der Zerstäubereinheit beschriebenen Merkmale einzeln oder in Kombination aufweisen. Es ergeben sich dieselben Vorteile wie in Zusammenhang mit der Zerstäubereinheit beschrieben.

Die Weiterbildung gemäß den Ansprüchen 9 und 10 betrifft bevorzugte Weiterbildungen des Minimalmengenschmiersystems und dabei insbesondere der Drücke des Kühl- und/oder Schmiermittels bzw. der dem ersten bzw. zweiten Zuführkanal bereitgestellten Druckluft bei aufgebautem Transportstrom.

Darüber hinaus wird das eingangs beschriebene Problem bei einer Bearbeitungsanlage durch die Merkmale des Anspruchs 11 gelöst.

Die Bearbeitungsanlage weist dabei vorzugsweise die in Zusammenhang mit der Zerstäubereinheit und/oder dem Minimalmengenschmiersystem beschriebenen Merkmale einzeln undloder in Kombination auf. Es ergeben sich dieselben Vorteile wie in Zusammenhang mit der Zerstäubereinheit und dem Minimalmengenschmiersystem beschrieben.

Bevorzugte Ausgestaltungen der Bearbeitungsanlage, insbesondere die Spindel und die Zerstäubereinheit betreffend, sind in den Ansprüchen 12 bis 15 beschrieben.

Schließlich wird das eingangs erläuterte Problem verfahrensmäßig mit dem Merkmal von Anspruch 16 gelöst. Es ergeben sich die gleichen Vorteile wie vorstehend im Zusammenhang mit der Zerstäubereinheit, dem Minimalmengenschmiersystem und/oder der Bearbeitungsanlage beschrieben.

Bei dem Verfahren kann eine Zerstäubereinheit und/oder ein Minimalmengenschmiersystem und/oder eine Bearbeitungsanlage wie hier beschrieben verwendet werden.

Im Folgenden wird die Erfindung anhand einer lediglich ein Ausführungsbeispiel darstellenden Zeichnung näher erläutert. In der Zeichnung zeigt
- Fig. 1: eine schematische Darstellung einer vorschlagsgemäßen Bearbeitungsanlage mit einer vorschlagsgemäßen Zerstäubereinheit eines vorschlagsgemäßen Minimalmengenschmiersystems,
- Fig. 2: in schematischer Darstellung ein Ausführungsbeispiel eines vorschlagsgemäßen Minimalmengenschmiersystems mit der vorschlagsgemäßen Zerstäubereinheit aus Fig. 1 in dreidimensionaler Außenansicht,
- Fig. 3: einen Schnitt durch die Zerstäubereinheit des Ausführungsbeispiels gemäß Ansicht III-III aus Fig. 2 und eine vergrößerte Detailansicht des Schnittes,
- Fig. 4: ein Ablaufdiagramm eines bevorzugten ZerspanBearbeitungsprozesses und
- Fig. 5: ein Werkzeug und ein Werkstück in verschiedenen Relativ-Stellungen.

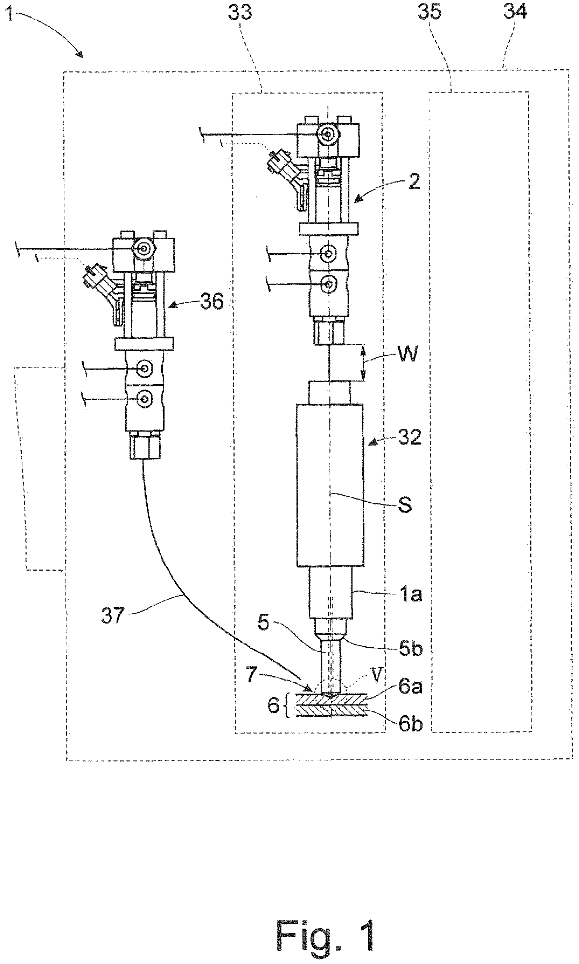

Die Fig. 1 zeigt schematisch eine vorschlagsgemäße Bearbeitungsanlage 1 mit einer vorschlagsgemäßen Zerstäubereinheit 2 eines vorschlagsgemäßen Minimalmengenschmiersystems 3.

Das Minimalmengenschmiersystem 3 ist hier und vorzugsweise dazu geeignet und/oder eingerichtet, im Zerspan-Bearbeitungsprozess gleich oder weniger als (insgesamt) 50 ml Kühl- und/oder Schmiermittel in der Stunde zu verbrauchen. Hier und vorzugsweise werden im Zerspan-Bearbeitungsprozess maximal 50 ml, weiter vorzugsweise maximal 40 ml, weiter vorzugsweise maximal 30 ml, Kühl- und/oder Schmiermittel in der Stunde verbraucht.

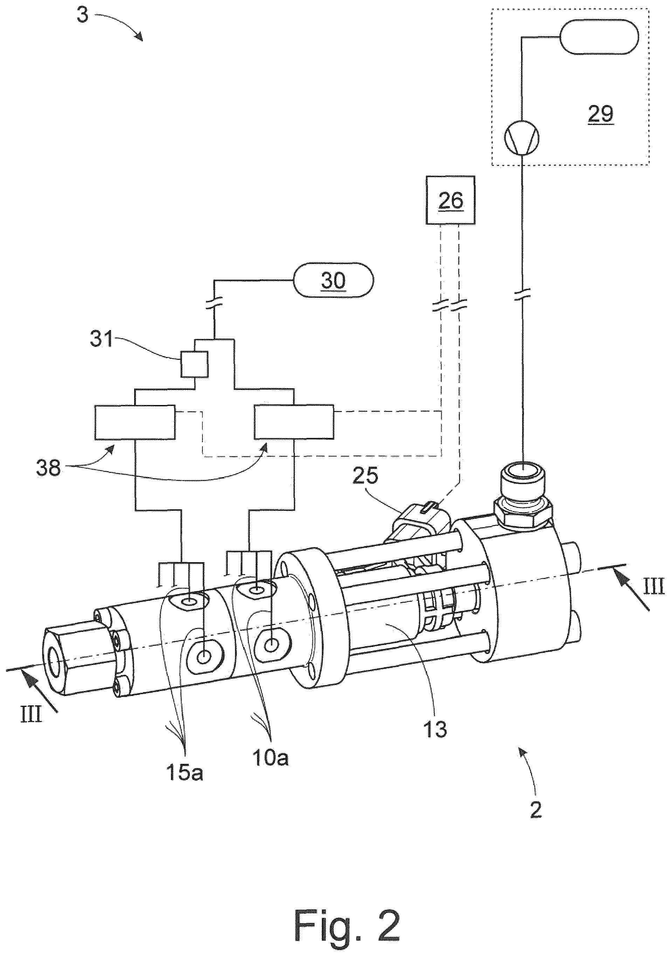

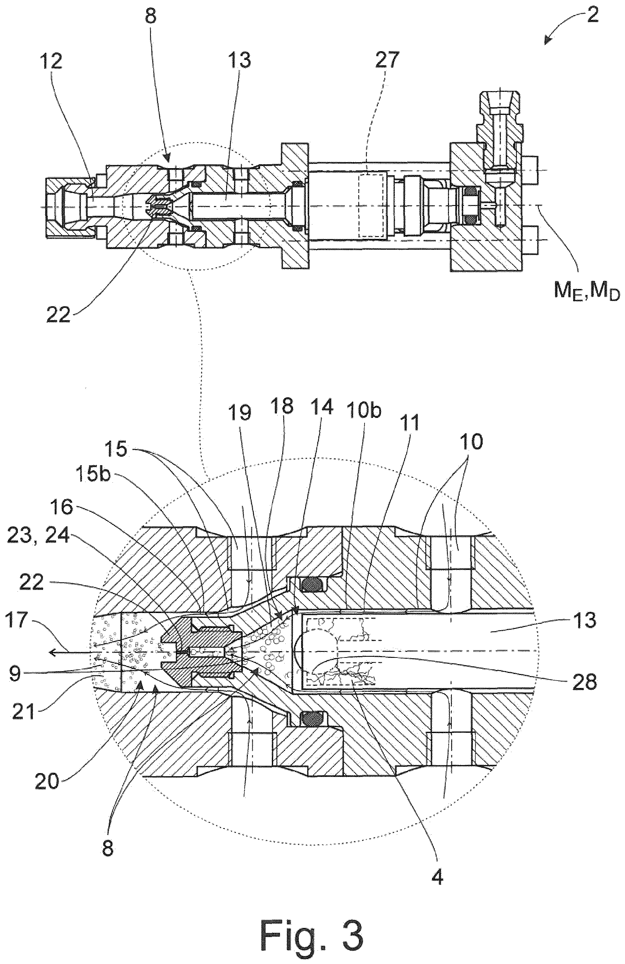

Die Funktionsweise der Zerstäubereinheit 2 soll anhand der Fig. 3 erläutert werden, welche die Zerstäubereinheit im Schnitt gemäß III-III der Fig. 2 zeigt.

Die Zerstäubereinheit 2 dient dem Bereitstellen eines Kühl- und/oder Schmiermittels 4 zum Kühlen und/oder Schmieren eines Zerspan-Bearbeitungsprozesses zwischen einem Werkzeug 5 und einem Werkstück 6 an einer Bearbeitungsstelle 7. Bei dem Werkzeug 5 kann es sich insbesondere um ein spanabhebendes Werkzeug 5, hier und vorzugsweise einen Bohrer, handeln. Das Werkstück 6 ist hier und vorzugsweise ein Strukturbauteil, insbesondere ein Flugzeugstrukturbauteil. Flugzeugstrukturbauteile sind beispielsweise Rumpfsektionen und/oder Flügelsektionen eines Flugzeugs. Das Werkstück 6 kann aus mehreren Werkstückteilen 6a, 6b bestehen. Sie werden hier gemeinsam durchbohrt und anschließend miteinander vernietet.

Die vorschlagsgemäße Zerstäubereinheit 2 weist eine Kammeranordnung 8 mit einem Kammeranordnungsinnenraum 9, mindestens einen ersten Zuführkanal 10 zum Zuführen eines ersten Druckluftstroms 11 in und durch den Kammeranordnungsinnenraum 9 zu einem Weiterführungskanal 12 und ein Einspritzventil 13 zum Einspritzen eines Kühl- und/oder Schmiermittels 4 in einen Einspritzbereich 14 in den ersten Druckluftstrom 11 im Kammeranordnungsinnenraum 9 auf.

Vorschlagsgemäß weist die Zerstäubereinheit 2 mindestens einen zweiten Zuführkanal 15 zum Zuführen eines zweiten Druckluftstroms 16 in und durch den Kammeranordnungsinnenraum 9 zu dem Weiterführungskanal 12 auf. Dabei ist die Zerstäubereinheit 2 derart ausgestaltet, dass sich der zweite Druckluftstrom 16 mit dem ersten Druckluftstrom (11) und dem ggf. in den ersten Druckluftstrom 11 eingespritzten Kühl- und/oder Schmiermittel stromabwärts des Einspritzbereichs 14 zu einem Transportstrom 17 zum Transport des eingespritzten Kühl- und/oder Schmiermittels 4 vereinigt und wobei der Transportstrom 17 durch den Weiterführungskanal 12 zur Bearbeitungsstelle 7 geführt wird.

Durch das Einspritzen des Kühl- und/oder Schmiermittels 4 in den ersten Druckluftstrom 11 und das spätere stromabwärts Hinzufügen eines zweiten Druckluftstroms 16 ermöglicht eine homogene Verteilung des Kühl- und/oder Schmiermittels 4 bei niedriger Konzentration im Transportstrom 17. Es ist ein Aerosol aus Druckluft und Kühl- und/oder Schmiermittel 4 herstellbar. Dies ist insbesondere von Vorteil bei kurzen Zerspan-Bearbeitungsprozessen, wie beispielsweise beim Bohren. Insbesondere beim Bohren von Flugzeugstrukturbauteilen und ggf. anschließenden Nieten treten solche kurzen Zerspan-Bearbeitungsprozesse auf.

Zudem ermöglicht dieser konstruktive Aufbau der Zerstäubereinheit 2 kurze Reaktionszeiten für das Zu- und Abschalten des Aerosols zum Zerspan-Bearbeitungsprozess. Es bildet sich durch das Einspritzen und/oder Zerstäuben des Kühl- und/oder Schmiermittels 4 mit dem Transportstrom 17 ein Aerosol, welches durch den Weiterführungskanal zur Bearbeitungsstelle 7 strömt und dort den Zerspan-Bearbeitungsprozess kühlt undloder schmiert.

Unter einem Aerosol wird ein koloides System aus Gas (hier der Druckluft) mit darin verteilten kleinen festen und/oder flüssigen Teilchen (Schwebstoffen, hier dem Kühl- und/oder Schmiermittel) verstanden. Hier und vorzugsweise sind es flüssige Teilchen. Die Teilchen weisen vorzugsweise Durchmesser von 10⁻⁷ bis 10⁻³ cm auf. Das Kühl- und/oder Schmiermittel weist im Ausführungsbeispiel und vorzugsweise eine kinematische Viskosität von 9*10⁻⁶ m²/s auf.

Im Ausführungsbeispiel und bevorzugt weist die Kammeranordnung 8, wie in der vergrößerten Darstellung der Fig. 3 gezeigt, vorzugsweise eine Einspritzkammer 18 auf, in deren Innenraum 19 durch das Einspritzventil 13 das Kühl-und/oder Schmiermittel 4 eingespritzt wird und wobei die Einspritzkammer 18 den Einspritzbereich 14 umfasst. Im Ausführungsbeispiel bildet die Einspritzkammer 18 den Einspritzbereich 14.

Der erste Druckluftstrom 11 strömt im Ausführungsbeispiel durch mehrere, hier vier, erste Teilzuführkanäle 10a in die Zerstäubereinheit 2. Diese werden, hier und vorzugsweise in der Zerstäubereinheit 2, zu einem ersten Gesamtzuführkanal 10b vereint. Die Zuführung des ersten Druckluftstroms 11 zur Einspritzkammer 18 erfolgt hier radial umlaufend um das Einspritzventil 13 bzw. den Auslass des Einspritzventils 13. Vorzugsweise verläuft mindestens eine Richtungskomponente des ersten Druckluftstroms 11 beim Eindringen in die Einspritzkammer 18 in Haupteinspritzrichtung des Kühl- und/oder Schmiermittels 4. Hier verläuft der erste Druckluftstrom 11 unmittelbar vor dem Eindringen in die Einspritzkammer 18 im Wesentlichen parallel zur Haupteinspritzrichtung des Kühl- und/oder Schmiermittels 4.

Bei dem Einspritzventil 13 handelt es sich hier und vorzugsweise um ein Hochdruckeinspritzventil, insbesondere ein Benzindirekteinspritzventil. Dieses ist aus dem Automobilbereich bekannt und zuverlässig erprobt. Das Einspritzventil 13 ist elektrisch ansteuerbar. Es wird hier und vorzugsweise mit einer Spannung von 48V versorgt. Zur Ansteuerung und/oder Spannungsversorgung weist es einen elektrischen Anschluss 25 auf. Dieser ist mit einer Steuerungsanordnung 26 verbindbar. Zum Öffnen und/oder Schließen des Einspritzventils 13 weist dieses hier und vorzugsweise einen Elektromagneten 27 und/oder einen Piezo-Aktuator auf. Mittels diesem wird ein Schließstift 28 zum Öffnen undloder Schließen des Einspritzventils 13 bewegt.

Hier und vorzugsweise wird das Einspritzventil 13 pulsartig angesteuert. Dabei ist bevorzugt die Öffnungsdauer des Einspritzventils 13 kürzer als die Dauer zwischen zwei Öffnungen des Einspritzventils 13.

Es kann insbesondere vorgesehen sein, dass für verschiedene Kühl- und/oder Schmiermittel 4 unterschiedliche Pulsfrequenzen einstellbar sind. Vorzugsweise wird die Dauer zwischen zwei Öffnungen des Einspritzventils 13, insbesondere in Abhängigkeit von der Viskosität des Kühl- und/oder Schmiermittels, verstellt. Die Öffnungsdauer des Einspritzventils 13 während eines Pulses bleibt dabei vorzugsweise konstant. Im Ausführungsbeispiel und vorzugsweise ergibt sich eine Kühl- und/oder Schmiermitteleinspritzmenge im Transportluftstrom von 29 glh.

Ferner weist die Kammeranordnung 8 eine Zerstäuberkammer 20 auf, in deren Innenraum 21 das Kühl- und/oder Schmiermittel 4 zerstäubt wird. Dabei bildet der Innenraum 21 der Zerstäuberkammer 20 einen Teil des Kammeranordnungsinnenraums 9. Die Zerstäuberkammer 20 ist stromabwärts der Einspritzkammer 18 angeordnet. Grundsätzlich kann das Kühl- und/oder Schmiermittel 4 bereits beim Einspritzen desselben in die Einspritzkammer 4 zerstäubt werden. Hier und vorzugsweise wird es jedoch in der Zerstäuberkammer 20 zumindest weiter zerstäubt. Auf diese Weise lässt sich ein homogenes Aerosol für das Kühlen und/oder Schmieren des Zerspan-Bearbeitungsprozesses erzeugen.

Um die Qualität des zu erzeugenden Aerosols weiter zu verbessern, können die Einspritzkammer 18 und die Zerstäuberkammer 20 durch eine Düse 22, insbesondere zum Zerstäuben des ersten Druckluftstroms 11 mit dem ggf. eingespritzten Kühl- und/oder Schmiermittel 4, voneinander getrennt sein. Hier und vorzugsweise strömt der erste Druckluftstrom 11, ggf. mit dem eingespritzten Kühl- und/oder Schmiermittel, durch die Düse 22 von der Einspritzkammer 18 in die Zerstäuberkammer 20. Das eingespritzte Kühl- und/oder Schmiermittel 4 wird durch den ersten Druckluftstrom 11 durch die Düsenöffnung 23 der Düse 22 getrieben. Der erste Druckluftstrom 11 fördert also das in ihn eingespritzte Kühl- und/oder Schmiermittel 4 durch die Düse 22 und zerstäubt es so. Auch die Düse 22 weist hier und vorzugsweise einen Innenraum 24 auf. Der Innenraum 24 der Düse 22, der Innenraum 18 der Einspritzkammer 18 und der Innenraum 21 der Zerstäuberkammer 20 bilden hier und vorzugsweise gemeinsam den Kammeranordnungsinnenraum 9.

Die Düsenöffnung 23 ist hier und vorzugsweise im Wesentlichen rund ausgebildet. Grundsätzlich kann sie jedoch auch eine andere Geometrie aufweisen. Ihre maximale Durchtrittsöffnungsweite beträgt hier und vorzugsweise maximal 0,5 mm, weiter vorzugsweise maximal 0,3 mm, hier 0,2 mm.

Im Ausführungsbeispiel wird das Kühl- und/oder Schmiermittel 4 von dem ersten Druckluftstrom 11 durch die Düse 22 gefördert und das Kühl- und/oder Schmiermittel 4 in den zweiten Druckluftstrom 16 zerstäubt.

Der zweite Druckluftstrom 16 strömt im Ausführungsbeispiel durch mehrere, hier vier, zweite Teilzuführkanäle 15a in die Zerstäubereinheit 2. Diese werden, hier und vorzugsweise in der Zerstäubereinheit 2, zu einem zweiten Gesamtzuführkanal 15b vereint. Die Zuführung zur Zerstäuberkammer 20 erfolgt hier radial umlaufend um die Düse 22. Vorzugsweise verläuft mindestens eine Richtungskomponente des ersten Druckluftstroms 11 beim Eindringen in die Zerstäuberkammer 20 in Längsrichtung der Düsenöffnung 23. Hier verläuft der zweite Druckluftstrom 11 unmittelbar vor dem Eindringen in die Zerstäuberkammer 20 im Wesentlichen parallel zur Längsrichtung der Düsenöffnung 23. Bei aufgebautem Transportstrom 17 ist der Volumenstrom des zweiten Druckluftstroms 16 hier und vorzugsweise größer als der Volumenstrom des ersten Druckluftstroms 11, weiter vorzugsweise mindestens um den Faktor 2 größer als der Volumenstrom des ersten Druckluftstroms 11, weiter vorzugsweise mindestens um den Faktor 5 größer als der Volumenstrom des ersten Druckluftstroms 11, weiter vorzugsweise mindestens um den Faktor 10 größer als der Volumenstrom des ersten Druckluftstroms 11, ist.

Die Fig. 2 zeigt das vorschlagsgemäße Minimalmengenschmiersystem 3. Es weist im Ausführungsbeispiel die zuvor beschriebene Zerstäubereinheit 2 auf. Zudem ist eine Kühl- und/oder Schmiermittelquelle 29 zur Versorgung des Einspritzventils 13 mit Kühl- und/oder Schmiermittel 4 vorgesehen. Das Kühl-und/oder Schmiermittel 4 ist hier und vorzugsweise flüssig. Es wird hier und vorzugsweise von der Kühl- und/oder Schmiermittelquelle 29 mit einem Druck von 50 bis 250 bar vorzugsweise von 80 bis 220 bar, weiter vorzugsweise von 100 bis 200 bar, weiter vorzugsweise von 130 bis 170 bar, hier von 150 bar, bereitgestellt. So hohe Drücke ermöglichen bereits beim Einspritzen in die Einspritzkammer 18 eine gute Verteilung des Kühl- und/oder Schmiermittels 4.

Ferner weist das Minimalmengenschmiersystem 3 eine Druckluftquellenanordnung 30 zur Versorgung des ersten und/oder zweiten Zuführkanals 10, 15 mit Druckluft auf. Vorzugsweise ist eine einzige Druckluftquelle zur Versorgung beider Zuführkanäle mit Druckluft vorgesehen. Alternativ können jedoch auch zwei getrennte Druckluftquellen die Druckluftquellenanordnung ausbilden und eine erste Druckluftquelle versorgt den ersten Zuführkanal mit Druckluft und eine zweite Druckluftquelle versorgt den zweiten Zuführkanal mit Druckluft. Die Druckluft wird hier und vorzugsweise aus Umgebungsluft erzeugt.

Wie in der Fig. 2 gezeigt, weist das Minimalmengenschmiersystem 3 des Ausführungsbeispiels eine Druckluftquelle auf, welche die Druckluft für den ersten Druckluftstrom 11 und den zweiten Druckluftstrom 16 bereitstellt. Vorzugsweise ist hier in der Zuleitung für den ersten Druckluftstrom 11 ein Nachverdichter 31 vorgesehen, welcher den Druck des ersten Druckluftstroms durch Nachverdichtung erhöht.

Besonders bevorzugt ist es so, dass dem ersten Zuführkanal 10 Druckluft mit einem höheren Druck bereitgestellt wird als dem zweiten Zuführkanal 15. Die Druckdifferenz der Druckbereitstellung beträgt hier und vorzugsweise von 2 bis 8 bar, weiter vorzugsweise von 4 bis 6 bar, weiter vorzugsweise im Wesentlichen 5 bar. Vorzugsweise wird dem ersten Zuführkanal 10 Druckluft bei aufgebautem Transportstrom 17 mit einem Druck von 3 bis 8 bar, weiter vorzugsweise 4 bis 7 bar, im Ausführungsbeispiel von 6 bar, bereitgestellt und/oder dem zweiten Zuführkanal 15 Druckluft bei aufgebautem Transportstrom 17 mit einem Druck von 8 bis 15 bar, weiter vorzugsweise von 9 bis 13 bar, hier von 11 bar, bereitgestellt. Vorzugsweise ist der Druck des ersten und des zweiten Druckluftstroms getrennt voneinander einstellbar.

Die vorschlagsgemäße Bearbeitungsanlage 1 weist ein Werkzeug 5 und ein Minimalmengenschmiersystem 1 mit einer Zerstäubereinheit 2 auf. Die Bearbeitungsanlage 1 weist eine Spindel 32 mit einer Werkzeugaufnahme 1a zur Aufnahme des Werkzeugs 5 auf. Hier weist die Bearbeitungsanlage 1 einen Endeffektor 34 auf, in welchem die Spindel 32 angeordnet ist.

Die Druckluftquellenanordnung und/oder die Kühl- und/oder Schmiermittelquelle 29 ist dabei hier und vorzugsweise entfernt vom Endeffektor 34 angeordnet.

Vorzugsweise handelt es sich bei der Bearbeitungsanlage 1 um eine Bohrmaschine, hier um eine Bohr/Nietmaschine. Das Werkzeug 5 ist im Ausführungsbeispiel ein Bohrer. Die Spindel 32 ist hier und vorzugsweise Bestandteil einer Bohreinheit 33 des Endeffektors 34. Zusätzlich kann der Endeffektor 34 eine Nieteinheit 35 zum Setzen von Nietelementen in ein mit der Bohreinheit 33 gebohrtes Loch aufweisen.

Ferner weist die Bearbeitungsanlage 1 eine Steuerungsanordnung 26 zur Steuerung der Bearbeitungsanlage 1 und des Minimalmengenschmiersystems 3 und damit des Zerspan-Bearbeitungsprozesses auf. Hier und vorzugsweise weist die Steuerungsanordnung 26 eine Bearbeitungsanlagensteuerung und ggf. eine Minimalmengenschmiersystemsteuerung auf. Bei der Bearbeitungsanlagensteuerung handelt es sich vorzugsweise um eine SPS-Steuerung. Sie steuert den Zerspan-Bearbeitungsprozess. Die Minimalmengenschmiersystemsteuerung erhält hier und vorzugsweise von der Bearbeitungsanlagensteuerung Kühl- und/oder Schmiermittelparameter. In Abhängigkeit von diesen wird das Minimalmengenschmiersystem 3, insbesondere die Zerstäubereinheit 2 des Minimalmengenschmiersystems 3, gesteuert, insbesondere das Beifügen des Kühl- undloder Schmiermittel 4 sowie der Transportstrom 17.

Wie in der Fig. 1 gezeigt, ist die Zerstäubereinheit 2 hier und vorzugsweise außerhalb der Spindel 32 angeordnet. Dies ist insbesondere bei kleinen und kompakten Spindeln 32 notwendig. Eine Anordnung der Zerstäubereinheit 2 in der Spindel 32 ist hier bauraumbedingt zumeist nicht möglich. Der Weiterführungskanal 12 verläuft hier von der Zerstäubereinheit 2 durch die Spindel 32 und das Werkzeug 5 zur Bearbeitungsstelle 7.

Die Zerstäubereinheit 2 ist in Strömungsrichtung des Transportstroms 17 vor der Spindel 32 angeordnet. Vorzugsweise beträgt der Strömungsweg W von der Zerstäubereinheit 2 bis zur Spindel 32 weniger als 50 cm, weiter vorzugsweise weniger als 20 cm, weiter vorzugsweise weniger als 10 cm. Je dichter sich die Zerstäubereinheit 2 an der Spindel 32 befindet, desto kürzere Latenzzeiten für das Zu- undloder Wegschalten des Aerosols können erreicht werden.

Vorzugsweise ist es so, dass die Spindelachse S das Einspritzventil 13 und/oder die Düse 22 schneidet, weiter vorzugsweise, dass die Spindelachse S koaxial zur Mittelachse M_{E} des Einspritzventils und/oder zur Mittelachse M_{D} der Düsenöffnung 23 der Düse 22 angeordnet ist. Dies ermöglicht eine besonders gute Führung des Aerosols im Weiterführungskanal 12. Alternativ können die Spindelachse S und die Mittelachse M_{E} und/oder die Mittelachse M_{D} auch nicht koaxial angeordnet sein. Bevorzugt sind sie dann parallel zueinander ausgebildet oder ihr Schnittpunkt ist vorzugsweise maximal 20 cm, weiter vorzugsweise maximal 10 cm, von der Zerstäubereinheit entfernt angeordnet.

Nachfolgend soll der Zerspan-Bearbeitungsprozess näher beschrieben werden. Besonders bevorzugt ist es, dass vor oder während eines Zerspan-Bearbeitungsprozesses der Transportstrom 17 aufgebaut wird und dem aufgebauten Transportstrom 17 das Kühl- und/oder Schmiermittel 4, mit dem Transportstrom 17 ein Aerosol bildend, beigefügt wird.

Das Aerosol kann dann auf besonders einfache Art und Weise durch den Transportstrom 17 zur Bearbeitungsstelle 7 transportiert werden. Das Aufbauen des Transportstroms 17 vor dem Einspritzen des Kühl- und/oder Schmiermittels ermöglicht eine sehr genaue Steuerung des Zufügens des Kühl- undloder Schmiermittels sowie dessen Transport zur Bearbeitungsstelle 7 und damit ein sehr genaues Steuern der Kühlung bzw. Schmierung. Hierdurch können geringe Mengen Kühl- und/oder Schmiermittel 4 zu genau den Zeitpunkten eingesetzt werden, zu denen das Kühl- und/oder Schmiermittel 4 tatsächlich benötigt wird oder einen Vorteil bietet.

Im Ausführungsbeispiel wird das Kühl- undloder Schmiermittel 4 erst nach dem Ausbilden eines konstanten Transportstroms 17 beigefügt. Also dann, wenn der Transportstrom 17 sich quasistationär ausgebildet hat. Dies ermöglicht es, die Zeitspanne, nach der das Aerosol nach dem Ansteuern des Einspritzventils 13 zum Einspritzen des Kühl- undloder Schmiermittels 4 aus der mindestens einen Austrittsöffnung 5a des Werkzeugs 5 austritt, sehr genau zu bestimmen. Besonders bevorzugt wird das Kühl- und/oder Schmiermittel 4 derart dem Transportstrom 17 beigefügt, dass das Aerosol erst nach dem Eintauchen, insbesondere vollständigen Eintauchen, mindestens einer Austrittsöffnung 5a des Werkzeugs 5a in das Werkstück 6 aus der mindestens einen Austrittsöffnung 5a austritt.

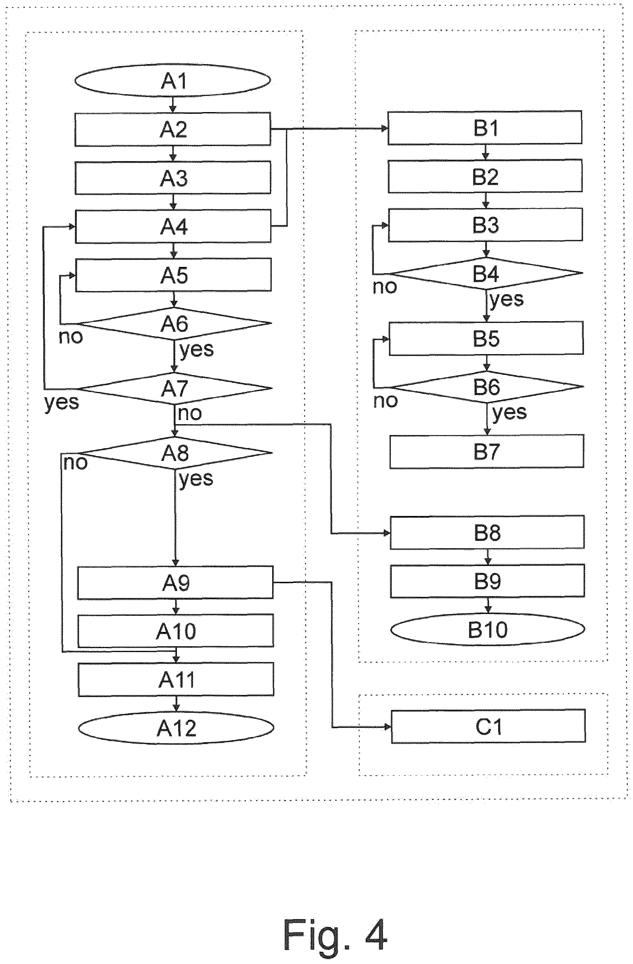

Der Zerspan-Bearbeitungsprozess, im Ausführungsbeispiel der Fig. 4 ein Bohrprozess, beginnt hier und vorzugsweise mit dem Laden der Zerspan-Bearbeitungsparameter für den anstehenden Zerspan-Bearbeitungsprozess (A2: Start Zerspan-Bearbeitungsprozess).

Die Zerspan-Bearbeitungsparameter können beispielsweise das zu verwendende Werkzeug 5 und/oder die Zerspan-Geometrie, hier beispielsweise die Geometriedaten des Bohrlochs, und/oder eine Startposition und/oder ein Werkzeugvorschub undloder eine Spindeldrehzahl und/oder Werkstückparameter, wie beispielsweise Werkstückmaterialaufbau undloder Werkstückgeometrie und/oder Werkstückausrichtung, und/oder Kühl- und/oder Schmiermittelparameter sein. Vorzugsweise wird, hier und vorzugsweise durch und/oder mit der Übergabe von mindestens einem Kühl- und/oder Schmiermittelparameter, ein Kühl- und/oder Schmierprozess mittels des Minimalmengenschmiersystems 3 gestartet (B1: Übergabe Kühl- und/oder Schmiermittelparameter). Dieser wird weiter unten genauer beschrieben. Nach dem Laden der Zerspan-Bearbeitungsparameter wird das Werkzeug 5 hier und vorzugsweise zu der Startposition verfahren (A3: Verfahren zur Startposition).

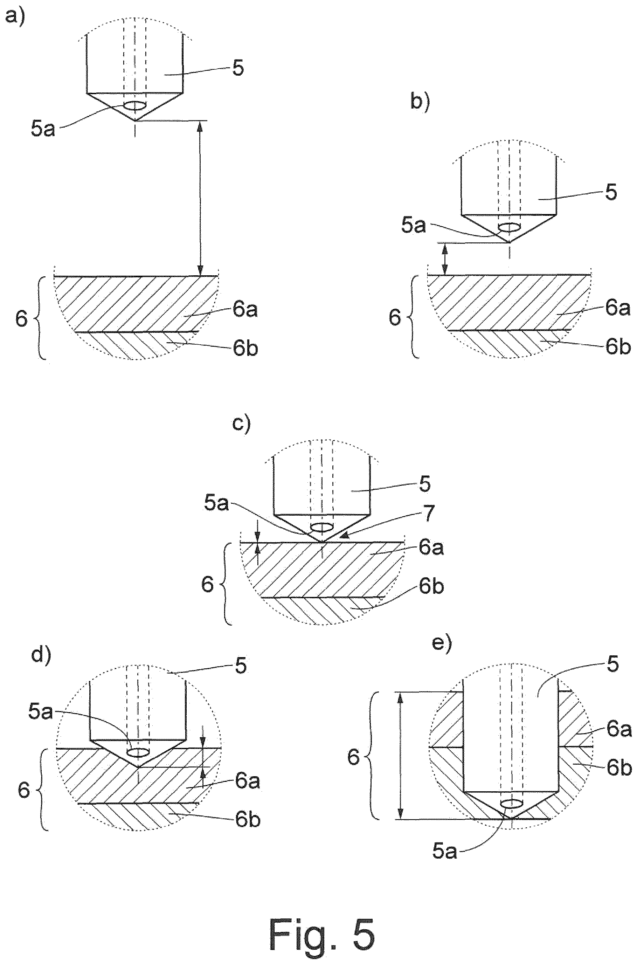

Unter der Startposition wird hier und vorzugsweise die Position verstanden, von der aus das Werkzeug 5 zum Zerspanen in einem Bearbeitungsmodus angefahren wird, vgl. Fig. 5a). Die Startposition wird in der Regel in einem Eilgang, vorzugsweise mit einer sich an diesen anschließenden Feinpositionierung, angefahren. Während des Verfahrens im Eilgang und während der sich anschließenden Feinpositionierung befindet sich die Bearbeitungsanlage 1 in einem Positioniermodus.

Im Ausführungsbeispiel der Fig. 4 werden nun die Zerspan-Bearbeitungsparameter für den Zerspan-Bearbeitungsprozess, insbesondere die nächste Lage des Werkstücks 6, aktiviert. Hier und vorzugsweise wird die Spindel 32 auf die Spindeldrehzahl beschleunigt und ein Vorschubverfahrprofil für das Werkzeug 5 aktiviert (A4: Aktivierung der Zerspan-Bearbeitungsparameter).

Darauf folgt das Zerspanen im Zerspan-Bearbeitungsprozess. Hier wird bis zu einem Lagenende des Werkstücks 6 gebohrt (A5: Bohren bis Lagenende). Wird ein Lagenende des Werkstücks 6 erreicht (A6: Lagenende erreicht?) wird abgefragt, ob das Werkstück 6 eine weitere Lage aufweist (A7: weitere Lage). Weist es eine weitere Lage auf, werden für diese weitere Lage die Zerspan-Bearbeitungsparameter aktiviert und insofern wird zur Aktivierung der Zerspan-Bearbeitungsparameter (Schritt A4) zurückgesprungen. Für die weitere Lage können insofern erneut Kühl- und/oder Schmiermittelparameter, insbesondere an das Minimalmengenschmiersystems 3, übergeben werden. Der Kühl-und/oder Schmierprozess wird dann entsprechend angepasst. Weist das Werkstück 6 keine weitere Lage auf, wird der Kühl- und/oder Schmierprozess gemäß einer Stoproutine beendet (B8 bis B10).

Danach erfolgt hier und vorzugsweise eine Abfrage, ob eine Senkoperation durchzuführen ist (A8: Senkoperation?). Ist dies der Fall, folgt eine Senkroutine. Ist dies nicht der Fall, wird das Werkzeug 5 vom Werkstück 6 zurückgezogen, hier der Bohrer aus dem gebohrten Loch herausgezogen (A11: Herausziehen des Werkzeugs). Damit ist das Loch fertiggestellt und der Zerspan-Bearbeitungsprozess abgeschlossen (A 12: Ende Zerspan-Bearbeitungsprozess).

Soll noch eine Senkoperation durchgeführt werden, wird ein Fast-Travel (also ein weiterer Vorschub mit erhöhter Vorschubgeschwindigkeit) zu einem Senkereintritt durchgeführt und die Senkoperation gestartet. Das Senken erfolgt mit einem Senkabschnitt 5b des Werkzeugs 5. Hier und vorzugsweise löst der Fast-Travel zu dem Senkereintritt einen Senk-Kühl- undloder -Schmierprozess aus (A9: Fast-Travel zu Senkereintritt). Das Kühlen und/oder Schmieren der Senkoperation erfolgt hier und vorzugsweise mittels einer externen Minimalmengenschmierung. Hier und vorzugsweise weist das Minimalmengenschmiersystem 3 eine externe Zerstäubereinheit 36 auf, welche außerhalb der Spindel 32 angeordnet ist und deren externer Weiterführungskanal 37 an der Spindel 32 vorbei zur Bearbeitungsstelle 7 führt. Vorzugsweise weist die externe Zerstäubereinheit 36 dieselben Merkmale wie die interne Zerstäubereinheit 6 auf. Vorzugsweise sind sie bauglich.

Es können ebenfalls Kühl- und/oder Schmiermittelparameter für die externe Minimalmengenschmierung übergeben werden (C: externe Minimalmengenschmierung). Ist die Senkoperation ausgeführt (A10: Ende der Senkoperation), wird das Werkzeug 5 wie bereits beschrieben aus dem gebohrten Loch herausgezogen (A11: Herausziehen des Werkzeugs) und der Zerspan-Bearbeitungs-prozess abgeschlossen (A12: Ende Zerspan-Bearbeitungsprozess).

Der Kühl- und/oder Schmierprozess läuft hier während des Zerspan-Bearbeitungsprozesses folgendermaßen ab.

Hier wird vorzugsweise durch Übergabe von mindestens einem Kühl- undloder Schmiermittelparameter der Kühl- und/oder Schmierprozess innerhalb der Steuerungsanordnung 26 gestartet (B1: Übergabe Kühl- und/oder Schmiermittelparameter).

Hierdurch wird eine, insbesondere interne, Schmiermittelversorgung aktiviert. Unter einer internen Schmiermittelversorgung ist hier und vorzugsweise das Minimalmengenschmiersystem 3 mit der Zerstäubereinheit 2 zu verstehen, welches die Bearbeitungsstelle 7 durch das Werkzeug 5 mit Kühl- und/oder Schmiermittel 4 versorgt (B2: Aktivieren der internen Minimalmengenschmierung).

Vorzugsweise werden nun Einstellungen für den Transportstrom 17 und/oder einen ersten Druckluftstrom 11 und/oder einen zweiten Druckluftstrom 16 vorgenommen (B3: Einstellung des Transportstroms). Diese Einstellungen basieren hier und vorzugsweise auf den übergebenen Kühl- und/oder Schmiermittelparametern.

Es hat sich als vorteilhaft herausgestellt, wenn die Steuerungsanordnung 26 zu einem Transportluft-Ansteuerzeitpunkt den Aufbau des Transportstroms 17, insbesondere durch Ansteuerung einer Druckluftventilanordnung 38, basierend auf einem vordefinierten Ereignis, dem Transportluft-Ereignis, des Zerspan-Bearbeitungsprozesses oder zu einem prognostizierten vordefinierten zukünftigen Ereignis, dem prognostizierten Transportluft-Ereignis, des Zerspan-Bearbeitungsprozesses vornimmt. Hierdurch lässt sich der Aufbau des Transportstroms 17 besonders gut und präzise auf die Anforderung im Zerspan-Bearbeitungsprozess hin ansteuern.

Das Transport-Ereignis oder prognostizierte Transport-Ereignis kann eine vorbestimmte zeitliche und/oder geometrische Entfernung des Werkzeugs 5 zum Werkstück 6 und/oder der erste Kontakt des Werkzeugs 5 mit dem Werkstück 6 und/oder das unmittelbar bevorstehende Eintauchen der mindestens einen Austrittsöffnung des Werkzeugs 5 in das Werkstück 6 und/oder das Erreichen einer vorbestimmten Eintauchtiefe der Austrittsöffnung 5a des Werkzeugs 5 in das Werkstück 6 und/oder das vollständige Eintauchen der mindestens einen Austrittöffnung 5a des Werkzeugs 5 in das Werkstück 6 sein.

Im Ausführungsbeispiel der Fig. 4 ist das Transportluft-Ereignis das Erreichen einer vorbestimmten zeitlichen Entfernung des Werkzeugs 5 zum Werkstück 6 (B4: Erreichen der vorbestimmten Entfernung des Werkzeugs zum Werkstück). Dies entspricht der Relativ-Stellung von Werkzeug 5 und Werkstück 6 in Fig. 5b). Hier ist das Erreichen eine zeitlichen Entfernung des Werkzeugs 5, hier der Bohrerspitze, zum Werkstück 6 von 50ms als Transportluft-Ereignis vorgesehen. Diese zeitliche Entfernung ist aufgrund des bekannten Vorschubs leicht bestimmbar. Beim Eintritt dieses Ereignisses wird der Transportstrom aufgebaut (B5: Aufbau des Transportstroms). Der Aufbau des Transportstroms dauert zwischen 15 und 40 ms, vorzugsweise zwischen 20 und 30 ms, hier 25 ms.

Zusätzlich oder alternativ ist hier und vorzugsweise vorgesehen, dass die Steuerungsanordnung 26 zu einem Einspritz-Ansteuerzeitpunkt die Ansteuerung des Einspritzventils 13 zum Beifügen des Kühl- und/oder Schmiermittels 4 zum Transportstrom 17 basierend auf einem vordefinierten Ereignis, dem Einspritz-Ereignis, des Zerspan-Bearbeitungsprozesses oder zu einem prognostizierten vordefinierten zukünftigen Ereignis, dem prognostizierten Einspritz-Ereignis, des Zerspan-Bearbeitungsprozesses vornimmt. Auf dieser Basis kann, besonders genau auf den Zerspan-Bearbeitungsprozess und die Stellung des Werkzeugs 5 abgestimmt, das Kühl- und/oder Schmiermittel 4 zur Bearbeitungsstelle 7 transportiert werden. Der Transportluft-Ansteuerzeitpunkt liegt hier vor dem Einspritz-Ansteuerzeitpunkt. Vorzugsweise liegt der Transportluft-Ansteuerzeitpunkt mindestens zwischen 10 und 500 ms, weiter vorzugsweise zwischen 12 und 200 ms, weiter vorzugsweise zwischen 15 und 100 ms, weiter vorzugsweise zwischen 18 und 50 ms, hier 25 ms, vor dem Einspritz-Ansteuerzeitpunkt.

Das Einspritz-Ereignis oder das prognostizierte Einspritz-Ereignis kann eine vorbestimmte zeitliche und/oder geometrische Entfernung des Werkzeugs 5 zum Werkstück 6 und/oder der erste Kontakt des Werkzeugs 5 mit dem Werkstück 6 undloder das unmittelbar bevorstehende Eintauchen der mindestens einen Austrittsöffnung 5a des Werkzeugs 5 in das Werkstück 6 undloder das Erreichen einer vorbestimmten Eintauchtiefe der Austrittsöffnung 5a des Werkzeugs 5 in das Werkstück 6 undloder das vollständige Eintauchen der mindestens einen Austrittsöffnung des Werkzeugs 5 in das Werkstück 6 sein.

Hier und vorzugsweise ist das Einspritz-Ereignis der erste Kontakt des Werkzeugs 5, hier des Bohrers, mit dem Werkstück 6, also das Auftreffen der Bohrerspitze auf das Werkstück 6 (B6: Kontakt des Werkzeugs mit Werkstück). Dies ist in der Fig. 5c) gezeigt. Die Ansteuerung des Einspritzventils 13 zum Einspritzen des Kühl- und/oder Schmiermittels 4 erfolgt zu diesem Zeitpunkt und das Kühl- und/oder Schmiermittels wird eingespritzt (B7: Einspritzen des Kühl-/und/oder Schmiermittels). Die Zeit zwischen der Ansteuerung des Einspritzventils 13 und dem Austritt des Kühl- und/oder Schmiermittels 4 beträgt vorzugsweise maximal 15 ms, hier maximal 10 ms.

Die Ereignisse (Transportluft-Ereignis, prognostiziertes Transportluft-Ereignis, Einspritz-Ereignis, prognostiziertes Einspritz-Ereignis) dienen hier sozusagen als Trigger bzw. prognostizierte Trigger für den Aufbau des Transportstroms 17 bzw. das Ansteuern des Einspritzventils 13 zum Beginnen des Einspritzens des Kühl- undloder Schmiermittels 4.

Hier und vorzugsweise sind, wie sich aus der vorstehenden Erläuterung ergibt, das Einspritz-Ereignis bzw. das prognostizierte Einspritz-Ereignis und das Transportluft-Ereignis bzw. das prognostizierte Transportluft-Ereignis unterschiedlich definiert. Beide können jedoch auch gleich definiert sein, wobei dann ein, insbesondere vordefinierter, zeitlicher Versatz zwischen Transportluft-Ansteuerzeitpunkt und Einspritz-Ansteuerzeitpunkt vorgesehen ist.

Bevorzugt wird das Kühl- undloder Schmiermittel 4 derart dem Transportstrom 17 beigefügt, dass das Aerosol erst nach dem Eintauchen, insbesondere vollständigen Eintauchen, mindestens einer Austrittsöffnung 5a des Werkzeugs 5 in das Werkstück 6 aus der mindestens einen Austrittsöffnung 5a austritt. Im Ausführungsbeispiel erfolgt das Beifügen derart, dass das Aerosol erst nach dem vollständigen Eintauchen aller Austrittsöffnungen des Werkzeugs 5 aus der mindestens einen Austrittsöffnung 5a austritt. Eine entsprechende Relativ-Stellung ist in der Fig. 5d) gezeigt.

Es kann jedoch auch vorgesehen sein, dass das Ansteuerereignis spezifischer auf das Werkstück 6 bzw. eine Relativ-Stellung zwischen Werkstück 6 und Werkzeug 5 abgestimmt ist.

Es kann im Rahmen des Verfahrens eine Latenzzeit zwischen dem Ansteuern des Einspritzventils 13 und dem Austritt des Aerosols aus einer Austrittsöffnung 5a des Werkzeugs 5 bestimmt werden. Beispielsweise kann diese gemessen und vorzugsweise in der Steuerungsanordnung 26 abgespeichert werden. Eine solche kann aber beispielsweise auch von der Steuerungsanordnung 26 bestimmt, insbesondere berechnet werden.

Insbesondere können für verschiedene Werkzeuge 6 verschiedene Latenzzeiten bestimmt werden. Vorzugsweise bestimmt die Steuerungsanordnung 26 die Latenzzeit basierend auf einem bearbeitungsanlagen-spezifischen Wert und einem werkzeugspezifischen Wert und gegebenenfalls einem kühl- und/oder schmiermittelspezifischen Wert.

Bevorzugt beträgt die Latenzzeit kleiner gleich 50 ms, vorzugsweise kleiner gleich 40 ms, weiter vorzugsweise kleiner gleich 30 ms.

Zum Beifügen des Kühl- undloder Schmiermittels 4 wird der Austritt desselben aus dem Einspritzventil 13 gesteuert. Mit oder nach dem Austritt des Kühl-und/oder Schmiermittels 4 aus dem Einspritzventil 13 wird das Kühl- und/oder Schmiermittel 4 zerstäubt. Dies erfolgt hier und vorzugsweise mittels einer Düse 2. Diese ist vorzugsweise stromabwärts, insbesondere separat, von dem Einspritzventil 13 in der Zerstäubereinheit 2 angeordnet. Das Kühl- und/oder Schmiermittel 4 kann zuvor bereits durch das Einspritzventil 13 beim Austritt aus demselben teilzerstäubt werden.

Wie in der Fig. 5 gezeigt und weiter unten näher erläutert, wird das Aerosol durch Einspritzen des Kühl- und/oder Schmiermittels 4 in einen ersten Druckluftstrom 11, insbesondere mittels des Einspritzventils 13 und vorzugsweise durch das Zerstäuben des Druckluftgemisches des eingespritzten Kühl-und/oder Schmiermittels 4 und des ersten Druckluftstroms 11, insbesondere durch die Düse 22, erzeugt. Der erste Druckluftstrom 11 und der zweite Druckluftstrom 16 bilden dann hier und vorzugsweise, gegebenenfalls mit dem eingespritzten und/oder zerstäubten Kühl- und/oder Schmiermittel 4, den Transportstrom 17.

Das Kühl- und/oder Schmiermittel 4 wird, insbesondere mittels des Einspritzventils 13 und gegebenenfalls der Düse 22, pulsartig zur Bildung des Aerosols dem aufgebauten Transportstrom 17 zugefügt. Während des pulsartigen Zufügens des Kühl- und/oder Schmiermittels 4 ist die Öffnungsdauer des Einspritzventils 13 hier und vorzugsweise kürzer als die Dauer zwischen zwei Öffnungen des Einspritzventils 13. Zum Einspritzen des Kühl- undloder Schmiermittels 4 wird das Einspritzventil 13 vorzugsweise mit einer Ansteuerfrequenz von 5 bis 100 Hz, vorzugsweise 10 bis 50 Hz, hier 35 Hz, angesteuert. Die Öffnungsdauer des Einspritzventils 13 beträgt vorzugsweise weniger als 10 ms, weiter vorzugsweise weniger als 2 ms, weiter vorzugsweise weniger als 1 ms, weiter vorzugsweise weniger als 0,5 ms, weiter vorzugsweise weniger als 0,4 ms, im Ausführungsbeispiel 0,37 ms.

Vorzugsweise kann, insbesondere ein Bediener, das Minimalmengenschmiersystem 3 für ein Werkstück 6, insbesondere für jede Lage des Werkstücks 6, im Zerspan-Bearbeitungsprozess einstellen und/oder parametrisieren. Hierdurch kann für verschiedene Lagen, insbesondere jede Lage, des Werkstücks 6 die Kühl- und/oder Schmierung angepasst werden. Das Einstellen undloder Parametrisieren erfolgt hier und vorzugsweise vor dem Beginn des Zerspan-Bearbeitungsprozesses.

Eine Lage eines Werkstücks 6 kann durch ein Werkstückteil 6a, 6b gebildet werden. In diesem Fall kann für jedes Werkstückteil 6a, 6b das Minimalmengenschmiersystem 3 eingestellt und/oder parametrisiert werden.

Zusätzlich oder alternativ kann ein Werkstück 6, insbesondere ein Werkstückteil 6a, 6b, aus mehreren Lagen bestehen. Dies kann beispielsweise ein schichtweise aufgebautes Hybridwerkstück sein. Dann kann jede Schicht des Werkstücks 6 bzw. Werkstückteils 6a, 6b eine Lage des Werkstücks 6 bilden.

Vorzugsweise ist der Transportstrom 17, insbesondere der Druck des ersten Druckluftstroms 11 und/oder des zweiten Druckluftstroms 16, und die verwendete Kühl- und/oder Schmiermittelmenge, insbesondere durch den Bediener, einstellbar und/oder parametrisierbar. Das Einstellen und/oder Parametrisieren erfolgt hier und vorzugsweise vor dem Beginn des Zerspan-Bearbeitungsprozesses. Hier und vorzugsweise wird zum einen der Druck des zweiten Druckluftstroms 16 vom Bediener parametrisiert und die Steuerungsanordnung 26, insbesondere die Minimalmengenschmiersystemsteuerung, stellt basierend auf der Parametrisierung des zweiten Druckluftstroms 16 den ersten und den zweiten Druckluftstrom 11, 16 ein. Zusätzlich oder alternativ kann der Bediener die Schmiermittelmenge parametrisieren. Hier und vorzugsweise stellt die Steuerungsanordnung 26, insbesondere die Minimalmengenschmiersystemsteuerung, basierend auf der Parametrisierung der Schmiermittelmenge den Druck des Kühl- und/oder Schmiermittels 4 und/oder die Ansteuerung des Einspritzventils 13 ein. Die Einstellung der Ansteuerung des Einspritzventils 13 erfolgt hier und vorzugsweise durch die Bestimmung der Ansteuerfrequenz und/oder der Öffnungsdauer und/oder einen Transienten, welcher einen Flatterstatus des Ventils beschreibt.

Bevorzugt wird im Zerspan-Bearbeitungsprozess für eine erste Lage des Werkstücks 6 die Kühlung undloder Schmierung anders eingestellt, als für eine zweite Lage des Werkstücks 6. Zusätzlich oder alternativ kann das Beifügen von Kühl- und/oder Schmiermittel 4 für einzelne Lagen des Werkstücks 6 abgestellt werden, insbesondere wenn diese Lagen aus Faserverbundwerkstoff, insbesondere einem kohlenstofffaserverstärkten Kunststoff (CFK), sind.

Vorzugsweise sieht die Steuerungsanordnung 26 unterschiedliche Öffnungsdauern des Einspritzventils 13 in Abhängigkeit von der Viskosität des gerade verwendeten Kühl- und/oder Schmiermittels vor.

Wie ferner der Fig. 5 entnommen werden kann, wird beim Beenden des Zerspan-Bearbeitungsprozesses zunächst das Beifügen des Kühl- und/oder Schmiermittels 4 zu dem Transportstrom 17 gestoppt und danach der Transportstrom 17 gestoppt. Vorzugsweise erfolgt das Stoppen des Beifügen des Kühl- undloder Schmiermittels 4 mit dem beginnenden Austritt des Werkzeugs 5 aus dem Werkstück 6 und/oder dem vollständigen Durchstoßen des Werkzeugs 5, hier des Bohrkopfes, durch das Werkstück 6 undloder dem Erreichen einer vorbestimmten Relativ-Stellung des Werkzeugs 5 zum Werkstück 6.

Das Stoppen des Beifügens von Kühl- undloder Schmiermittel 4 erfolgt im Ausführungsbeispiel und vorzugsweise mit Erreichen eines Lagenendes, insbesondere des letzten Lagenendes, des Werkstücks 6 (B8: Stoppen des Einspritzens). Diese Relativ-Stellung von Werkzeug 5 und Werkstück 6 ist in der Fig. 5e) gezeigt. Vorzugsweise wird nach dem Stoppen des Beifügens des Kühl-und/oder Schmiermittels 4 zu dem Transportstrom 17 der Transportstrom 17 erst nach einer, insbesondere vorbestimmten, Zeit gestoppt (B9: Warten der vorbestimmten Zeit; B10: Stop des Transportstroms). Auf diese Art und Weise kann das Aerosol, welches sich noch im Weiterführungskanal 12 befindet, noch zu einem Großteil aus diesen heraustransportiert werden. Hier und vorzugsweise beträgt die Zeit vom Stoppen des Beifügens des Kühl- und/oder Schmiermittels 4 zu dem Transportstrom 17 und dem Stoppen des Transportstroms 17 vorzugsweise zwischen 50 und 500 ms, weiter vorzugsweise zwischen 200 und 300 ms, hier 250 ms.

Im Ausführungsbeispiel ist der Zerspan-Bearbeitungsprozess ein Bohrprozess für ein erstes Bohrloch. Nach diesem Bohrprozess kann ein weiterer Bohrprozess für ein zweites Bohrloch, insbesondere an demselben Werkstück 6, durchgeführt werden. Hier und vorzugsweise wird zwischen den beiden Bohrprozessen der Transportstrom 17 aufgehoben und neu gestartet, wobei vor oder während des zweiten Bohrprozesses als weiterer Zerspan-Bearbeitungsprozess der Transportstrom aufgebaut wird und dem zumindest im Einspritzbereich 14 aufgebauten Transportstrom 17 durch das Einspritzventil 13 das Kühl- und/oder Schmiermittel 4, mit dem Transportstrom 17 ein Aerosol bildend, beigefügt wird. Vorzugsweise wird zwischen den beiden Bohrprozessen ein Nietelement von der Bearbeitungsanlage 1 in das erste Bohrloch gesetzt. Durch die Abschaltung kann Energie gespart werden. Zudem wird vermieden, dass im Weiterführungskanal 12 anhaftende Kühl- undloder Schmiermittelreste während des Nietelementsetzens ausgeblasen werden.

## Patentansprüche

1. Zerstäubereinheit eines Minimalmengenschmiersystems (3) zum Kühlen und/oder Schmieren eines Zerspan-Bearbeitungs-Prozesses zwischen einem Werkzeug (5) und einem Werkstück (6) an einer Bearbeitungsstelle,
wobei die Zerstäubereinheit (2) eine Kammeranordnung (8) mit einem Kammeranordnungsinnenraum (9), mindestens einen ersten Zuführkanal (10) zum Zuführen eines ersten Druckluftstroms (11) in und durch den Kammeranordnungsinnenraum (9) zu einem Weiterführungskanal (12) und ein Einspritzventil (13) zum Einspritzen eines Kühl- undloder Schmiermittels (4) in einen Einspritzbereich (14) in den ersten Druckluftstrom (11) im Kammeranordnungsinnenraum (9) aufweist,
**dadurch gekennzeichnet,**
**dass** die Zerstäubereinheit (2) mindestens einen zweiten Zuführkanal (15) zum Zuführen eines zweiten Druckluftstroms (16) in und durch den Kammeranordnungsinnenraum (9) zu dem Weiterführungskanal (12) aufweist, wobei die Zerstäubereinheit (2) derart ausgestaltet ist, dass sich der zweite Druckluftstrom (16) mit dem ersten Druckluftstrom (11) und dem ggf. in den ersten Druckluftstrom (11) eingespritzten Kühl- undloder Schmiermittel (4) stromabwärts des Einspritzbereichs (14) zu einem Transportstrom (17) zum Transport des eingespritzten Kühl- und/oder Schmiermittels (4) vereinigt und wobei der Transportstrom (17) durch den Weiterführungskanal (12) zur Bearbeitungsstelle (7) geführt wird.

2. Zerstäubereinheit nach Anspruch 1, **dadurch gekennzeichnet, dass** die Kammeranordnung (8) eine Einspritzkammer (18) aufweist, in deren Innenraum (19) durch das Einspritzventil (13) das Kühl- und/oder Schmiermittel (4) eingespritzt wird und wobei die Einspritzkammer (18) den Einspritzbereich (14) umfasst, und wobei der Innenraum (19) der Einspritzkammer (18) einen Teil des Kammeranordnungsinnenraums (9) bildet,
undloder,
dass die Kammeranordnung (8) eine Zerstäuberkammer (20) aufweist, in deren Innenraum (21) das Kühl- und/oder Schmiermittel (4) zerstäubt wird, wobei der Innenraum (21) der Zerstäuberkammer (21) einen Teil des Kammeranordnungsinnenraums (9) bildet,
vorzugsweise, dass die Zerstäuberkammer (20) stromabwärts der Einspritzkammer (18) angeordnet ist.

3. Zerstäubereinheit nach Anspruch 1 oder 2, **dadurch gekennzeichnet, dass** die Einspritzkammer (18) und die Zerstäuberkammer (20) durch eine Düse (22) zum Zerstäuben voneinander getrennt werden, vorzugsweise, dass der erste Druckluftstrom (11), ggf. mit dem eingespritzten Kühl- undloder Schmiermittel (4), durch die Düse (22) von der Einspritzkammer (18) in die Zerstäuberkammer (20) strömt, weiter vorzugsweise, dass der erste Druckluftstrom (11) das in ihn eingespritzte Kühl- und/oder Schmiermittel (4) durch die Düse (22) fördert und so zerstäubt.

4. Zerstäubereinheit nach Anspruch 3, **dadurch gekennzeichnet, dass** der erste Druckluftstrom (11) das in ihn eingespritzte Kühl- undloder Schmiermittel (4) durch die Düse (22) fördert und das Kühl- undloder Schmiermittel (4) zerstäubt wird, vorzugsweise in den zweiten Druckluftstrom (16) zerstäubt wird.

5. Zerstäubereinheit nach einem der vorhergehenden Ansprüche, **dadurch gekennzeichnet, dass** das Einspritzventil (13) ein Benzindirekteinspritzventil ist, undloder, dass das Einspritzventil (13) elektrisch ansteuerbar ist, insbesondere, dass das Einspritzventil (13) zum Öffnen und/oder Schließen desselben einen Elektromagneten und/oder einen Piezo-Aktuator aufweist.

6. Zerstäubereinheit nach einem der vorhergehenden Ansprüche, **dadurch gekennzeichnet, dass** das Einspritzventil (13) pulsartig angesteuert wird, vorzugsweise, dass die Öffnungsdauer des Einspritzventils (13) kürzer ist als die Dauer zwischen zwei Öffnungen des Einspritzventils (13).

7. Zerstäubereinheit nach einem der vorhergehenden Ansprüche, **dadurch gekennzeichnet, dass** die Durchtrittsöffnungsweite der Durchtrittsöffnung (23) der Düse (22) maximal 0,5 mm, vorzugsweise maximal 0,3 mm, weiter vorzugsweise maximal 0,2 mm, groß ist.

8. Minimalmengenschmiersystem mit einer Zerstäubereinheit nach einem der vorhergehenden Ansprüche, mit einer Kühl- undloder Schmiermittelquelle (29) zur Versorgung des Einspritzventils (13) mit Kühl- und/oder Schmiermittel (4) und mit einer Druckluftquellenanordnung (30) zur Versorgung des ersten undloder zweiten Zuführkanals (10, 15) mit Druckluft.

9. Minimalmengenschmiersystem nach Anspruch 8, **dadurch gekennzeichnet, dass** das Kühl- undloder Schmiermittel (4) von der Kühl- undloder Schmiermittelquelle (29) mit einem Druck von 50 bis 250 bar, vorzugsweise von 80 bis 220 bar, weiter vorzugsweise von 100 bis 200 bar, weiter vorzugsweise von 130 bis 170 bar, weiter vorzugsweise 150 bar, bereitgestellt wird.

10. Minimalmengenschmiersystem nach Anspruch 8 oder 9, **dadurch gekennzeichnet, dass** dem ersten Zuführkanal (10) Druckluft mit einem höheren Druck bereitgestellt wird als dem zweiten Zuführkanal (15), vorzugsweise, dass die Druckdifferenz der Druckbereitstellung 2 bis 8 bar, vorzugsweise 4 bis 6 bar, weiter vorzugsweise 5 bar, beträgt.

11. Bearbeitungsanlage zum Zerspanen eines Werkstücks (6), wobei die Bearbeitungsanlage (1) ein Werkzeug (5) und eine Zerstäubereinheit (2) nach einem der Ansprüche 1 bis 7 undloder ein Minimalmengenschmiersystem (3) nach einem der Ansprüche 8 bis 10 aufweist.

12. Bearbeitungsanlage nach Anspruch 11, **dadurch gekennzeichnet, dass** die Bearbeitungsanlage (2) eine Spindel (32) mit einer Werkzeugaufnahme (1a) aufweist und dass der Weiterführungskanal (12) von der Zerstäubereinheit (2) durch die Spindel (32) und das Werkzeug (6) zur Bearbeitungsstelle (7), insbesondere gerade, verläuft.

13. Bearbeitungsanlage nach Anspruch 11 oder 12, **dadurch gekennzeichnet, dass** die Zerstäubereinheit (2) in Strömungsrichtung des Transportstroms (17) vor der Spindel (32) angeordnet ist, vorzugsweise, dass der Strömungsweg (W) von der Zerstäubereinheit (2) bis zur Spindel (32) weniger als 50 cm, vorzugsweise weniger als 20 cm, weiter vorzugsweise weniger als 10 cm, beträgt.

14. Bearbeitungsanlage nach einem der Ansprüche 11 bis 13, **dadurch gekennzeichnet, dass** die Bearbeitungsanlage (1) eine Bohrmaschine, insbesondere eine Bohr-/Nietmaschine, ist und dass das Werkzeug (5) ein Bohrer ist.

15. Bearbeitungsanlage nach einem der Ansprüche 11 bis 14, **dadurch gekennzeichnet, dass** die Bearbeitungsanlage (1) einen Endeffektor (34) aufweist, in welchem die Spindel (32) angeordnet ist, und dass die Druckluftquelle (30) und/oder die Kühl- und/oder Schmiermittelquelle (29) entfernt vom Endeffektor (34) angeordnet ist.

16. Verfahren zum Betreiben einer Zerstäubereinheit (2), insbesondere nach einem der Ansprüche 1 bis 7, undloder einer Minimalmengenschmieranlage (3), insbesondere nach einem der Ansprüche 8 bis 10, undloder einer Bearbeitungsanlage (1), insbesondere nach einem der Ansprüche 11 bis 15, wobei durch einen ersten Zuführkanal (10) ein erster Druckluftstrom (11) in und durch einen Kammeranordnungsinnenraum (9) einer Kammeranordnung (8) einer Zerstäubereinheit (2) zu einem Weiterführungskanal (12) geführt wird und durch ein Einspritzventil (13) ein Kühl- undloder Schmiermittel (4) in einen Einspritzbereich des Kammeranordnungsinneraums (9) in den ersten Druckluftstrom (11) eingespritzt wird,
**dadurch gekennzeichnet,**
**dass** durch einen zweiten Zuführkanal (15) ein zweiter Druckluftstrom (16) in und durch den Kammeranordnungsinnenraum (9) der Kammeranordnung (8) einer Zerstäubereinheit (2) zu einem Weiterführungskanal (12) geführt wird, wobei sich der zweite Druckluftstrom (16) und der erste Druckluftstrom (11) und ggf. das in den ersten Druckluftstrom (11) eingespritzte Kühl- und/oder Schmiermittel (4) in der Zerstäubereinheit (2) zu einem Transportstrom (17) vereinigen und durch den Weiterführungskanal (12) zur Bearbeitungsstelle (7) geführt werden.

## Claims

1. Atomizer unit of a minimal-quantity lubrication system (3) for cooling and/or lubricating a subtractive machining process between a tool (5) and a workpiece (6) at a machining location,
wherein the atomizer unit (2) has a chamber arrangement (8) having a chamber arrangement interior (9), at least one first supply duct (10) for supplying a first compressed-air stream (11) into and through the chamber arrangement interior (9) to a continuation duct (12), and an injection valve (13) for injecting a coolant and/or lubricant (4) into an injection region (14) into the first compressed-air stream (11) in the chamber arrangement interior (9),
**characterized**
**in that** the atomizer unit (2) has at least one second supply duct (15) for supplying a second compressed-air stream (16) into and through the chamber arrangement interior (9) to the continuation duct (12), wherein the atomizer unit (2) is designed in such a manner that, downstream of the injection region (14), the second compressed-air stream (16) combines with the first compressed-air stream (11) and with the coolant and/or lubricant (4) possibly injected into the first compressed-air stream (11), to form a transport stream (17) for transporting the injected coolant and/or lubricant (4), and wherein the transport stream (17) is routed through the continuation duct (12) to the machining location (7) .

2. Atomizer unit according to Claim 1, **characterized in that** the chamber arrangement (8) has an injection chamber (18) into the interior (19) of which the coolant and/or lubricant (4) is injected through the injection valve (13), and wherein the injection chamber (18) comprises the injection region (14), and wherein the interior (19) of the injection chamber (18) forms part of the chamber arrangement interior (9),
and/or
**in that** the chamber arrangement (8) has an atomizer chamber (20) into the interior (21) of which the coolant and/or lubricant (4) is atomized, wherein the interior (21) of the atomizer chamber (21) forms part of the chamber arrangement interior (9),
preferably **in that** the atomizer chamber (20) is arranged downstream of the injection chamber (18).

3. Atomizer unit according to Claim 1 or 2, **characterized in that** the injection chamber (18) and the atomizer chamber (20) are separated from each other by a nozzle (22) for atomization, preferably in that the first compressed-air stream (11), possibly with the injected coolant and/or lubricant (4), flows through the nozzle (22) from the injection chamber (18) into the atomizer chamber (20), more preferably **in that** the first compressed-air stream (11) conveys the coolant and/or lubricant (4), which is injected into it, through the nozzle (22) and thus atomizes it.

4. Atomizer unit according to Claim 3, **characterized in that** the first compressed-air stream (11) conveys the coolant and/or lubricant (4), which is injected into it, through the nozzle (22), and the coolant and/or lubricant (4) is atomized, preferably is atomized into the second compressed-air stream (16) .

5. Atomizer unit according to one of the preceding claims, **characterized in that** the injection valve (13) is a direct petrol injection valve, and/or **in that** the injection valve (13) is able to be electrically actuated, in particular **in that** the injection valve (13) for opening and/or closing the latter has a solenoid and/or a piezo-actuator.

6. Atomizer unit according to one of the preceding claims, **characterized in that** the injection valve (13) is actuated in a pulse-like manner, preferably in that the opening time of the injection valve (13) is shorter than the time between two openings of the injection valve (13).

7. Atomizer unit according to one of the preceding claims, **characterized in that** the passage opening width of the passage opening (23) of the nozzle (22) is a maximum of 0.5 mm, preferably a maximum of 0.3 mm, more preferably a maximum of 0.2 mm, in size.

8. Minimal-quantity lubrication system having an atomizer unit according to one of the preceding claims, having a coolant and/or lubricant source (29) for supplying the injection valve (13) with coolant and/or lubricant (4), and having a compressed-air source arrangement (30) for supplying the first and/or second supply duct (10, 15) with compressed air.

9. Minimal-quantity lubrication system according to Claim 8, **characterized in that** the coolant and/or lubricant (4) is provided by the coolant and/or lubricant source (29) at a pressure of 50 to 250 bar, preferably of 80 to 220 bar, more preferably of 100 to 200 bar, more preferably of 130 to 170 bar, more preferably 150 bar.

10. Minimal-quantity lubrication system according to Claim 8 or 9, **characterized in that** the first supply duct (10) is provided with compressed air at a higher pressure than the second supply duct (15), preferably **in that** the pressure difference of the pressure provision is 2 to 8 bar, preferably 4 to 6 bar, more preferably 5 bar.

11. Machining installation for the subtractive machining of a workpiece (6), wherein the machining installation (1) has a tool (5) and an atomizer unit (2) according to one of Claims 1 to 7 and/or a minimal-quantity lubrication system (3) according to one of Claims 8 to 10.

12. Machining installation according to Claim 11, **characterized in that** the machining installation (2) has a spindle (32) having a tool receiver (1a), and **in that** the continuation duct (12) runs, in particular straight, from the atomizer unit (2) through the spindle (32) and the tool (6) to the machining location (7).

13. Machining installation according to Claim 11 or 12, **characterized in that** the atomizer unit (2) is arranged in front of the spindle (32) in the direction of flow of the transport stream (17), preferably **in that** the flow path (W) from the atomizer unit (2) to the spindle (32) is less than 50 cm, preferably less than 20 cm, more preferably less than 10 cm.

14. Machining installation according to one of Claims 11 to 13, **characterized in that** the machining installation (1) is a drilling machine, in particular a drilling/riveting machine, and **in that** the tool (5) is a drill bit.

15. Machining installation according to one of Claims 11 to 14, **characterized in that** the machining installation (1) has an end effector (34) in which the spindle (32) is arranged, and **in that** the compressed-air source (30) and/or the coolant and/or lubricant source (29) are/is arranged at a distance from the end effector (34).

16. Method for operating an atomizer unit (2), in particular according to one of Claims 1 to 7, and/or a minimal-quantity lubrication installation (3), in particular according to one of Claims 8 to 10, and/or a machining installation (1), in particular according to one of Claims 11 to 15, wherein a first compressed-air stream (11) is routed by way of a first supply duct (10) into and through a chamber arrangement interior (9) of a chamber arrangement (8) of an atomizer unit (2) to a continuation duct (12), and a coolant and/or lubricant (4) is injected by way of an injection valve (13) into an injection region of the chamber arrangement interior (9) into the first compressed-air stream (11), **characterized in that** a second compressed-air stream (16) is routed by way of a second supply duct (15) into and through the chamber arrangement interior (9) of the chamber arrangement (8) of an atomizer unit (2) to a continuation duct (12), wherein the second compressed-air stream (16) and the first compressed-air stream (11) and possibly the coolant and/or lubricant (4), which is injected into the first compressed-air stream (11), are combined in the atomizer unit (2) to form a transport stream (17) and are routed through the continuation duct (12) to the machining location (7).

## Revendications

1. Unité de pulvérisation d'un système de lubrification minimale (3) destiné à refroidir et/ou lubrifier un processus d'usinage entre un outil (5) et une pièce (6) au niveau d'un site d'usinage,
l'unité de pulvérisation (2) comportant un ensemble de chambres (8) pourvu d'un espace intérieur (9), au moins un premier conduit d'amenée (10) destiné à amener un premier flux d'air comprimé (11) dans et à travers l'espace intérieur (9) de l'ensemble de chambres vers un conduit de continuation (12) et une soupape d'injection (13) destinée à injecter un agent de refroidissement et/ou de lubrification (4) dans une zone d'injection (14) du premier flux d'air comprimé (11) dans l'espace intérieur (9) de l'ensemble de chambres,
**caractérisée en ce que**
l'unité de pulvérisation (2) comporte au moins un deuxième conduit d'amenée (15) destiné à amener un deuxième flux d'air comprimé (16) dans et à travers l'espace intérieur (9) de l'ensemble de chambres vers le conduit de continuation (12), l'unité de pulvérisation (2) étant conçue de manière à combiner le deuxième flux d'air comprimé (16) au premier flux d'air comprimé (11) et à l'agent de refroidissement et/ou de lubrification (4), éventuellement injecté dans le premier flux d'air comprimé (11), en aval de la zone d'injection (14) pour former un flux de transport (17) destiné à transporter l'agent de refroidissement et/ou de lubrification (4) et le flux de transport (17) étant guidé à travers le conduit de continuation (12) vers le site d'usinage (7).

2. Unité de pulvérisation selon la revendication 1, **caractérisée en ce que** l'ensemble de chambres (8) comporte une chambre d'injection (18), dans l'espace intérieur (19) de laquelle l'agent de refroidissement et/ou de lubrification (4) est injecté par le biais de la soupape d'injection (13) et la chambre d'injection (18) comprenant la zone d'injection (14), et l'espace intérieur (19) de la chambre d'injection (18) formant une partie de l'espace intérieur (9) de l'ensemble de chambres,
et/ou,
l'ensemble de chambres (8) comporte une chambre de pulvérisation (20) dans l'espace intérieur (21) de laquelle l'agent de refroidissement et/ou de lubrification (4) est pulvérisé, l'espace intérieur (21) de la chambre de pulvérisation (21) formant une partie de l'espace intérieur (9) de l'ensemble de chambres, la chambre de pulvérisation (20) étant de préférence disposée en aval de la chambre d'injection (18).

3. Unité de pulvérisation selon la revendication 1 ou 2, **caractérisée en ce que** la chambre d'injection (18) et la chambre de pulvérisation (20) sont séparées l'une de l'autre par une buse (22) destinée à la pulvérisation, de préférence **en ce que** le premier flux d'air comprimé (11), comprenant éventuellement l'agent de refroidissement et/ou de lubrification (4) injecté, s'écoule à travers la buse (22) depuis la chambre d'injection (18) jusque dans la chambre de pulvérisation (20), de préférence encore **en ce que** le premier flux d'air comprimé (11) transporte l'agent de refroidissement et/ou de lubrification (4), injecté dans celui-ci, à travers la buse (22) et ainsi le pulvérise.

4. Unité de pulvérisation selon la revendication 3, **caractérisée en ce que** le premier flux d'air comprimé (11) transporte l'agent de refroidissement et/ou de lubrification (4), injecté dans celui-ci, à travers la buse (22) et l'agent de refroidissement et/ou de lubrification (4) est pulvérisé, de préférence est pulvérisé dans le deuxième flux d'air comprimé (16).

5. Unité de pulvérisation selon l'une des revendications précédentes, **caractérisée en ce que** la soupape d'injection (13) est une soupape d'injection directe d'essence, et/ou **en ce que** la soupape d'injection (13) peut être commandée électriquement, notamment **en ce que** la soupape d'injection (13) comporte un électroaimant et/ou un actionneur piézoélectrique afin d'ouvrir et/ou fermer celle-ci.

6. Unité de pulvérisation selon l'une des revendications précédentes, **caractérisé en ce que** la soupape d'injection (13) est commandée par impulsions, de préférence **en ce que** la durée d'ouverture de la soupape d'injection (13) est inférieure à la durée entre deux ouvertures de la soupape d'injection (13).

7. Unité de pulvérisation selon l'une des revendications précédentes, **caractérisée en ce que** la largeur de l'ouverture de passage (23) de la buse (22) est de 0,5 mm maximum, de préférence de 0,3 mm maximum, de préférence encore de 0,2 mm maximum.

8. Système de lubrification minimale pourvu d'une unité de pulvérisation selon l'une des revendications précédentes, ledit système comprenant une source d'agent de refroidissement et/ou de lubrification (29) destinée à alimenter la soupape d'injection (13) en agent de refroidissement et/ou de lubrification (4) et un ensemble de source d'air comprimé (30) destiné à alimenter le premier et/ou le deuxième conduit d'amenée (10, 15) en air comprimé.

9. Système de lubrification minimale selon la revendication 8, **caractérisé en ce que** l'agent de refroidissement et/ou de lubrification (4) provenant de la source d'agent de refroidissement et/ou de lubrification (29) est fourni à une pression de 50 à 250 bars, de préférence de 80 à 220 bars, plus préférablement de 100 à 200 bars, plus préférablement de 130 à 170 bars, plus préférablement à 150 bars.

10. Système de lubrification minimale selon la revendication 8 ou 9, **caractérisé en ce que** de l'air comprimé est fourni au premier conduit d'amenée (10) à une pression supérieure à celle fournie au deuxième conduit d'amenée (15), de préférence **en ce que** la différence de pression de l'alimentation en pression est de 2 à 8 bars, de préférence de 4 à 6 bars, de préférence encore de 5 bars.

11. Installation d'usinage d'une pièce (6), ladite installation (1) comportant un outil (5) et une unité de pulvérisation (2) selon l'une des revendications 1 à 7 et/ou un système de lubrification minimale (3) selon l'une des revendications 8 à 10.

12. Installation d'usinage selon la revendication 11, **caractérisée en ce que** l'installation d'usinage (2) comporte une broche (32) pourvue d'un porte-outil (1a) et **en ce que** le conduit de continuation (12) s'étend, notamment en ligne droite, de l'unité de pulvérisation (2) à travers la broche (32) et l'outil (6) jusqu'au site d'usinage (7) .

13. Installation d'usinage selon la revendication 11 ou 12, **caractérisée en ce que** l'unité de pulvérisation (2) est disposée en amont de la broche (32) dans le sens d'écoulement du flux de transport (17), de préférence **en ce que** le chemin d'écoulement (W) de l'unité de pulvérisation (2) jusqu'à la broche (32) est inférieur à 50 cm, de préférence inférieur à 20 cm, plus préférablement inférieur à 10 cm.

14. Installation d'usinage selon l'une des revendications 11 à 13, **caractérisée en ce que** l'installation d'usinage (1) est une perceuse, notamment une perceuse/riveteuse, et **en ce que** l'outil (5) est un foret.

15. Installation d'usinage selon l'une des revendications 11 à 14, **caractérisé en ce que** l'installation d'usinage (1) comporte un effecteur terminal (34) dans lequel la broche (32) est disposée, et **en ce que** la source d'air comprimé (30) et/ou la source d'agent de refroidissement et/ou de lubrification (29) sont disposées à distance de l'effecteur terminal (34).

16. Procédé de fonctionnement d'une unité de pulvérisation (2), notamment selon l'une des revendications 1 à 7, et/ou d'une installation de lubrification minimale (3), notamment selon l'une des revendications 8 à 10, et/ou d'une installation d'usinage (1), notamment selon l'une des revendications 11 à 15, un premier flux d'air comprimé (11) étant guidé à travers un premier conduit d'amenée (10) dans et à travers un espace intérieur (9) d'un ensemble de chambres (8) d'une unité de pulvérisation (2) jusqu'à un conduit de continuation (12) et un agent de refroidissement et/ou de lubrification (4) étant injecté par le biais d'une soupape d'injection (13) dans une zone d'injection de l'espace intérieur (9) de l'ensemble de chambres jusque dans le premier flux d'air comprimé (11),
**caractérisé en ce qu'**un deuxième flux d'air comprimé (16) est guidé dans et à travers l'espace intérieur (9) de l'ensemble de chambres (8) d'une unité de pulvérisation (2) par le biais d'un deuxième conduit d'amenée (15) jusqu'à un conduit de continuation (12), le deuxième flux d'air comprimé (16) et le premier flux d'air comprimé (11) et éventuellement l'agent de refroidissement et/ou de lubrification (4), injecté dans le premier flux d'air comprimé (11), étant combinés dans l'unité de pulvérisation (2) pour former un flux de transport (17) et étant guidés à travers le conduit de continuation (12) jusqu'au site d'usinage (7).
